# EUROPEAN PATENT SPECIFICATION

(11) **EP 1 183 649 B1**
(45) Date of publication and mention of the grant of the patent: **12.11.2003**
(21) Application number: 99931404.0
(22) Date of filing: 03.06.1999
(51) Int. Cl.: G06T 11/20

(54) **METHOD FOR MANUAL EDITING OF A CLOSED CONTOUR**
VERFAHREN ZUR MANUELLEN BEARBEITUNG VON GESCHLOSSENEN KURVEN
PROCEDE D'EDITION MANUELLE D'UN CONTOUR FERME

(43) Date of publication of application: 06.03.2002
(73) Proprietor: Boston Scientific Limited, St. Michael, Barbados (BB)
(72) Inventor: ZHANG, Xiangmin, Sunnyvale, CA 94086 (US)
(74) Representative: Evens, Paul Jonathan
(86) International application number: IB9901344
(87) International publication number: WO00075871

(56) References cited:
- EP-A- 0 535 894
- WO-A-97/34261
- US-A- 5 337 404
- US-A- 5 431 161
- US-A- 5 610 996
- US-A- 5 632 008

## Description

### BACKGROUND OF THE INVENTION

This invention relates to manual line graphics editing, particularly as applied to real-time applications, such as used for segment selection of an intravascular ultrasonic image. This invention applies specifically to closed contour editing for defining a boundary on a cross-sectional plane of a vascular image.

Manual editing is a very useful tool in medical imaging, especially when segmentation is needed to obtain measurements. Because no suitable automated methods are available to detect segments of medical images in known medical imaging systems, reliance on manual tracing is needed.

Manual editing is also very important for automated detection requiring observer supervision. In particular instances, there is a need to manually edit portions of the computer detection for further analysis.

Several manual editing methods are currently available for drawing closed contours. In one known method, a user can draw the contour using a computer mouse or other drawing device. During the tracing, the user must erase part or all of the drawing through a continuous process of deleting the current end point of the drawing. Once the drawing is completed, no modification is allowed except the deletion of the entire contour. In other known methods, the contour is segmented among a set of control vertices. By pulling the vertices, the user can adjust the contour locally. More vertices may be inserted while redundant vertices may be removed. Although this method provides the ability to change the contour, it requires substantial amount of user interaction.

Another method allows the user to indicate two points on the contour after which the user first deletes the segment to be changed and then draws the new segment. This method requires still additional interaction, and the user cannot compare the new segment with the old segment.

It is known from EP-A-0535894 to provide apparatus for transforming a graphic pattern. The apparatus comprises means for specifying a portion of the graphic pattern to be transformed, means for generating a reference pattern and means for transforming the graphic pattern by replacing a specified portion of the graphic pattern with a specified portion of the reference pattern. In use, starting and ending points on the reference pattern are specified, together with a route direction, to define the specified position of the reference pattern. The starting point must be an intersection between the graphic pattern and the reference pattern; and the ending point must be a point on the reference pattern.

It is known from US-A-5610996 to provide method an apparatus that organizes sample text into a format that facilitates character recognition. The sample text is segmented into areas and a center of gravity is calculated for each arc. The arc features are saved as descriptive of the sample text for use in character recognition.

### SUMMARY OF THE INVENTION

According to the present invention, there is provided a method as claimed in claim 1. The method may be used for manually defining and for changing a bounded portion on an intravascular ultrasonic image and may comprise marking end points of a contour segment to be changed on a single lobe displayed on a computer screen, and/or drawing the change between the endpoints while leaving all segments displayed, calculating the three centroids for each of the three resultant regions which the segmentations of the contour defined and, based on the results, selecting the preferred segment to close the contour while simultaneously deselecting the undesired segment.

In this method, user is allowed to draw the contour either by continuously drawing the points of the contour or simply by indicating vertices of a polygon, and a visible line is generated to connect two consecutive vertices before the old line is deleted. Once the contour has been decided upon, the drawing is completed by automatically generating a replacement line to join the starting and end points closing the contour.

The core of this invention is the algorithm for editing segments of a contour. In this method, user can start to draw a new segment over any segment to be changed. The new segment can be drawn in any directions, clockwise or anticlockwise. If done, the old segment will be replaced by the new one. This process can be repeated unlimited times until the user is satisfied.

The invention will be better understood upon reference to the following detailed description in connection with the accompanying drawings.

### BRIEF DESCRIPTION OF THE DRAWINGS

Fig. 1 is a drawing of a closed contour showing the operation of the invention.
Fig. 2 is a flow chart of the method according to the invention.

### DESCRIPTION OF SPECIFIC EMBODIMENTS

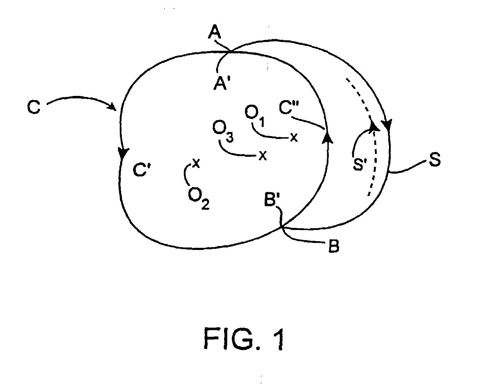

Fig. 1 is an example of a closed contour which is edited. Let C be a closed contour. Let S be the new segment drawn. Let A and B be the beginning and end points of S. Points A' and B' are two points on contour C corresponding to respective points A and B which have minimum distances to A and B. Points A' and B' divide C into two segments C' and C''.

The segments each have a direction, either as a result of the order of the creation of the segment or by convention. The directions of all three segments are indicated by ^ in Figure 1. Assume a change to the segment which close to the new drawing, in this case, C''.

According to the invention, the centroid positions of the three segments is used to determine which segment is to be replaced. The centroid position of each segment is calculated and then the segment to be replaced is selected on the basis of the resultant centroid location.

The method according to the invention involves the following steps:
1. Find the point on C with minimum distance to A, denoted as A'.
2. Find the point on C with minimum distance to B, denoted as B'.
3. Divide contour C into two segment C' and C''.
4. Compute centroids for S, C', and C''. Let the locations be designated O1, O2, and O3, respectively, with appropriate coordinates.
5. Invoke the function: If the separation between O1 and O2 is greater than the separation of O1 and O3, then replace segment C'' with S. (If ¦ O1 - O2 ¦ > ¦ O1 - O3 ¦, segment C'' is replaced by S). If S and C'' are of opposite direction, S is reversed to S'. The final contour becomes either C' - B' B - S'- A A' or C' - B' B - S - A A' .
6. Otherwise if the separation between O1 and O2 is less than the separation of O1 and 03, then replace segment C' with S. (If ¦ O1 - O2 ¦ < ¦ O1 - O3 ¦, segment C' is replaced by S). If S and C' have opposite direction, S is reversed to S'. The final contour becomes either C'' - A' A - S' - B B' or C'' - A' A - S - B B'.

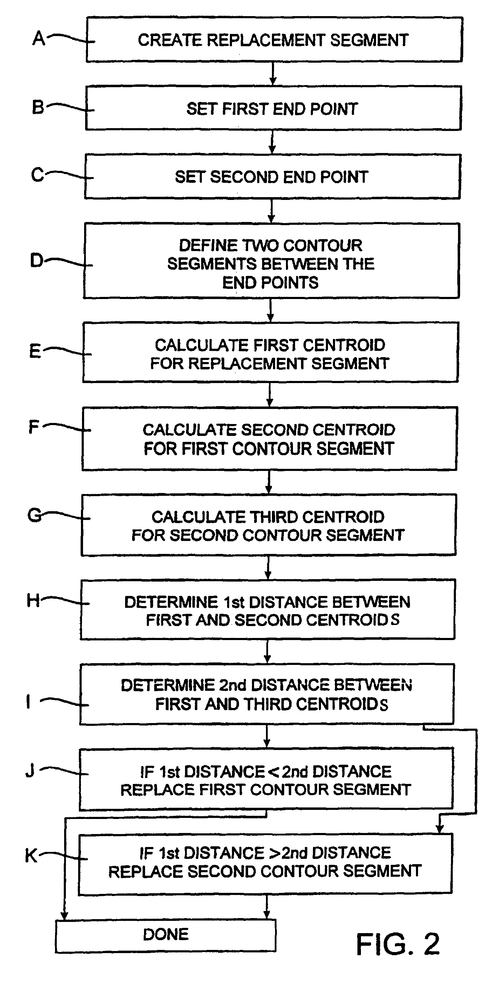

Referring to Figure 2, there is a flow chart of a specific method according to the invention. The steps include:
creating a replacement segment (Step A);
establishing a first end point of the replacement segment at a first intersection point of the closed contour (Step B);
establishing a second end point of the replacement segment at a second intersection point of the closed contour (Step C);
defining a first contour segment and a second contour segment of the closed contour between the first intersection point and the second intersection point (Step D);
calculating for the replacement segment a first centroid (Step E);
calculating for the first contour segment a second centroid (Step F);
calculating for the second contour segment a third centroid (Step G);
determining as a first distance value the difference between the first centroid and the second centroid (Step H);
determining as a second distance value the difference between the first centroid and the third centroid (Step I);
replacing the first contour segment with the replacement contour segment if the first distance value is less than the second distance value (Step J); otherwise
replacing the second contour segment with the replacement contour segment if the second distance value is less than the first distance value (Step K).

Once the new contour is constructed, a smoothing filter with a specified window can be used to improve the appearance or remove minor mistakes, if preferred. For example, the coordinates of a specified number of neighboring points, P1, P2, ..., P2k+1, may be averaged and used as the new coordinates for point Pk.

If the user is satisfied with the manual tracing, the coordinates of the final contour are saved together with other necessary information.

The invention has been described in connection with a two dimensional coordinate system, as may be displayed on a flat screen. However, it is to be recognized that this editing technique is not limited to two dimensional contours having only x and y directions. It is possible to edit projections of three dimensional objects in two dimensions by simply extending the centroid calculation to include an axis in the z direction.

## Claims

1. A method for editing a graphical representation of a closed contour (C) having a single lobe in a graphical line editing system, the method comprising:
creating a replacement segment (S) ;
establishing a first end point (A) of said replacement segment (S) at a first intersection point (A') of said closed contour (C);
establishing a second end point (B) of said replacement segment (S) at a second intersection point (B') of said closed contour (C);
defining a first contour segment (C') and a second contour segment (C") of said closed contour (C) between said first intersection point (A') and said second intersection point (B');
calculating for said replacement segment (S) a first centroid (O₁);
calculating for said first contour segment (C') a second centroid (O₂);
calculating for said second contour segment (C") a third centroid (O₃);
determining as a first distance value the difference between said first centroid (O₁) and said second centroid (O₂);
determining as a second distance value the difference between said first centroid (O₁) and said third centroid (O₃);
replacing said first contour segment (C') with said replacement contour segment (S) if said first distance value is less than said second distance value; otherwise
replacing said second contour segment (C") with said replacement contour segment (S) if said second distance value is less than said first distance value.

2. A method according to claim 1, wherein said closed contour (C) is defined in a Cartesian coordinate system, wherein each said centroid calculation step comprises:
summing all values of points of each segment in x for each point x to obtain a sum in x;
dividing said sum in x by the number of points in x to determine an x coordinate of the centroid;
summing all values of points of each segment in y for each point y to obtain a sum in y;
dividing said sum in y by the number of points in y to determine a y coordinate of the centroid.

3. A method according to claim 2, wherein the segments (S, C', C")have directionality, and wherein directionality is used to distinguish between segment types.

## Patentansprüche

1. Verfahren zum Bearbeiten einer grafischen Darstellung einer geschlossenen Kurve (C) mit einer einzelnen Schleife in einem System zum grafischen Bearbeiten von Linien, wobei das Verfahren umfasst:
- Erzeugen eines Austauschabschnitts (S),
- Festlegen eines ersten Endpunkts (A) des Austauschabschnitts (S) an einem ersten Schnittpunkt (A') der geschlossenen Kurve (C),
- Festlegen eines zweiten Endpunkts (B) des Austauschabschnitts (S) an einem zweiten Schnittpunkt (B') der geschlossenen Kurve (C),
- Definieren eines ersten Kurvenabschnitts (C') und eines zweiten Kurvenabschnitts (C") der geschlossenen Kurve (C) zwischen dem ersten Schnittpunkt (A') und dem zweiten Schnittpunkt (B'),
- Berechnen eines ersten Schwerpunkts (O₁) für den Austauschabschnitt (S),
- Berechnen eines zweiten Schwerpunkts (O₂) für den ersten Kurvenabschnitt (C'),
- Berechnen eines dritten Schwerpunkts (O₃) für den zweiten Kurvenabschnitt (C"),
- Bestimmen, als ein erster Abstandswert, der Differenz zwischen dem ersten Schnittpunkt (O₁) und dem zweiten Schwerpunkt (O₂),
- Bestimmen, als ein zweiter Abstandswert, der Differenz zwischen dem ersten Schwerpunkt (O₁) und dem dritten Schwerpunkt (O₃),
- Austauschen des ersten Kurvenabschnitts (C') mit dem Austauschkurvenabschnitt (S), wenn der erste Abstandswert kleiner als der zweite Abstandswert ist, wobei andernfalls
- der zweite Kurvenabschnitt (C") mit dem Austauschkurvenabschnitt (S) ausgetauscht wird, wenn der zweite Abstandswert kleiner als der erste Abstandswert ist.

2. Verfahren nach Anspruch 1, bei dem die geschlossene Kurve (C) in einem kartesischen Koordinatensystem definiert ist, wobei jeder Schwerpunktsberechnungsschritt umfasst:
- Addieren aller Werte von Punkten jedes Abschnitts in x für jeden Punkt x, um eine Summe in x zu erhalten,
- Teilen der Summe in x durch die Anzahl von Punkten in x, um eine x-Koordinate des Schwerpunkts zu bestimmen,
- Addieren aller Werte von Punkten in jedem Abschnitt in y für jeden Punkt y, um eine Summe in y zu erhalten,
- Teilen der Summe in y durch die Anzahl von Punkten in y, um eine y-Koordinate des Schwerpunkts zu bestimmen.

3. Verfahren nach Anspruch 2, bei dem die Abschnitte (S, C', C") Richtungscharakteristika aufweisen und bei dem die Richtungscharakteristika verwendet werden, um zwischen Abschnittstypen zu unterscheiden.

## Revendications

1. Procédé pour éditer une représentation graphique d'un contour fermé (C) ayant un lobe unique dans un système d'édition de lignes graphiques, le procédé comprenant :
la création d'un système d'un segment de remplacement (S) ;
l'établissement d'un premier point d'extrémité (A) dudit segment de remplacement (S) en un premier point d'intersection (A') dudit contour fermé (C) ;
l'établissement d'un second point d'extrémité (B) dudit segment de remplacement (S) à un second point d'intersection (B') dudit contour fermé (C) ;
la définition d'un premier segment de contour (C') et d'un second segment de contour (C") dudit contour fermé (C) entre ledit premier point d'intersection (A') et ledit second point d'intersection (B') ;
le calcul pour ledit segment de remplacement (S) d'un premier centroïde (O₁) ;
le calcul pour ledit premier segment de contour (C') d'un second centroïde (O₂) ;
le calcul pour ledit second segment de contour (C") d'un troisième centroïde (O₃) ;
la détermination en tant que première valeur de distance, de la distance entre le premier centroïde (O₁) et le second centroïde (O₂) ;
la détermination comme seconde valeur de distance de la différence entre le premier centroïde (O₁) et le troisième centroïde (O₃) ;
le remplacement dudit premier segment de contour (C') par ledit segment de contour de remplacement (S) si ladite première valeur de distance est inférieure à ladite seconde valeur de distance ; sinon
le remplacement dudit second segment de contour (C") par ledit segment de contour de remplacement (S) si ladite seconde valeur de distance est inférieure à ladite première valeur de distance.

2. Procédé selon la revendication 1, dans lequel ledit contour fermé (C) est défini dans un système de coordonnées cartésien, dans lequel chacune de ladite étape de calcul de centroïde comprend :
l'addition de toutes les valeurs de points de chaque segment dans x pour chaque point x pour obtenir une somme dans x ;
la division de ladite somme dans x par le nombre de points dans x pour déterminer une coordonnée x du centroïde ;
l'addition de toutes les valeurs de points dans chaque segment dans y pour chaque point y pour obtenir une somme dans y ;
la division de ladite somme dans y par le nombre de points dans y pour déterminer une coordonnée y du centroïde.

3. Procédé selon la revendication 2, dans lequel les segments (S, C', C") ont une orientation, et dans lequel l'orientation est utilisée pour distinguer entre les types de segments.
